# EUROPEAN PATENT SPECIFICATION

(11) **EP 4 201 642 B1**
(45) Date of publication and mention of the grant of the patent: **08.10.2025**
(21) Application number: 22214737.3
(22) Date of filing: 19.12.2022
(51) Int. Cl.: B29C 51/46, B29C 51/14, B29C 51/26, B29C 51/00, B29L 31/00, B29C 51/10

(54) **THERMOFORMING APPARATUS, METHOD FOR MAKING A CONTAINER BY THERMOFORMING AND RELATED CONTAINER**
THERMOFORMVORRICHTUNG, VERFAHREN ZUR HERSTELLUNG EINES BEHÄLTERS DURCH THERMOFORMEN UND ZUGEHÖRIGER BEHÄLTER
APPAREIL DE THERMOFORMAGE, PROCÉDÉ DE FABRICATION D'UN RÉCIPIENT PAR THERMOFORMAGE ET RÉCIPIENT ASSOCIÉ

(30) Priority: 23.12.2021 IT 202100032435
(43) Date of publication of application: 28.06.2023
(73) Proprietor: G. Mondini SpA, 25033 Cologne (BS) (IT)
(72) Inventor: MONDINI, Giovanni, deceased (IT)
(74) Representative: Ponchiroli, Simone

(56) References cited:
- JP-A- 2004 279 287
- KR-A- 20210 122 429
- KR-B1- 102 253 385
- US-A1- 2013 048 467

## Description

This invention relates to a thermoforming apparatus and a method for making a container by thermoforming, as well as the container which can be made in this way. In particular, this invention is preferably intended for making containers used in the food sector, which may be intended to contain for example fresh products such as meats and cheeses.

There are already many prior art thermoforming apparatuses which allow a container to be made by thermoforming a thermoformable film, which advantageously may be multi-layered. The thermoforming is carried out by feeding the thermoformable film to a thermoforming device, whose technical features are known to a person expert in the sector, activating the thermoforming device, and finally moving the containers made in this way towards an outfeed station.

This invention applies both with regard to containers made exclusively by thermoforming, and with regard to containers which comprise an outer skeleton inside which a coating made of plastic material is thermoformed.

As is known, thermoforming apparatuses operate on the thermoformable film causing it to stretch and consequently causing a more or less marked reduction in its thickness in the different zones of the container. However, it is possible that this stretching generates defects which make the thermoformed container unusable and therefore to be rejected. For example, in some zones excessive localised stretching of the material may be caused, above all of the thinnest layers of the film, creating holes in them.

This problem is particularly felt in the case in which the thermoforming apparatuses make containers comprising at least one barrier layer, that is to say, a layer of material suitable for constituting a barrier to oxygen, whose function is to cause a seal against oxygen relative to the outside. Containers of this type are widely used in the food sector, to guarantee that foods contained in the container can be preserved for a longer time.

Tests performed by the Applicant showed that it is possible to guarantee the seal against oxygen when the thickness of the barrier layer in the thermoformed container is between 1 µm and 4 µm, a value much lower than what is commonly adopted in the sector.

Since, as already said, the thermoforming process causes stretching of the thermoformable film, most prior art thermoforming apparatuses are configured to thermoform a thermoformable film which at the start comprises a barrier layer with a thickness of approximately 20 µm. In fact that thickness is generally considered a safe thickness for obtaining a container in which the barrier layer guarantees the seal against oxygen. In fact it has been verified in experiments that thermoforming a film comprising a 20 µm barrier layer allows thermoformed containers to be obtained which are always capable of guaranteeing the necessary seal against oxygen. In contrast the same result in terms of quality is generally not achievable in industrial plants, when the thickness of the starting material is less than 20 µm; in fact if the starting thickness is reduced, at best at least some of the thermoformed containers are not capable of guaranteeing the necessary seal against oxygen.

However, precise laboratory tests carried out by the Applicant have shown that, when the starting thickness is less than 20 µm, the defects which are caused do not affect the entire barrier layer, but only delimited portions of it in which the layer is excessively stretched. Tests carried out in a laboratory also allowed verification of the fact that, by optimising the thermoforming process, it is possible to obtain containers which are free of defects (that is to say, with a barrier layer whose thickness is not less than 1/2 µm), even starting with a thermoformable film whose thickness is much less than 20 µm (for example equal to 5 µm; but obviously the value also depends on how much the film must be stretched in the thermoforming process).

Consequently, the technical solution commonly adopted, which involves the use of films with barrier layers having a thickness equal to 20 µm, at least theoretically leads to a considerable waste of material. In fact despite involving very thin thickness, the overall quantity of material wasted is high due to the large quantities of containers which are made each day.

In addition to that, it should be noticed that, for reasons mainly linked to the rules which currently govern recyclability of material, in multi-layer films there are generally proportions which must be complied with between the thicknesses of the various layers: therefore a high thickness of the barrier layer must be matched by relatively high thicknesses of the other layers too, thereby obtaining relatively thick multi-layer films. The thermoforming of thick films results in additional costs on top of those theoretically necessary, linked to excess material consumption for making the containers.

What is described above led the Applicant to seek a solution to these problems. In particular, the Applicant opted to study how to optimise prior art thermoforming methods and apparatuses, the aim being to succeed in thermoforming thermoformable films with a thickness much less than the safe thickness currently widely adopted, at the same time avoiding excessive stretching, in particular of the thinnest layers.

Prior art document US 2013/048467 A1 relates to thermoforming systems, and more particularly to apparatuses, systems, and methods for thermoforming with billets, in particular for thermoforming containers for foodstuffs.

US 2013/048467 A1, in one aspect, describes a thermoforming device in the form of a billet thermoforming system which comprises a heating apparatus having one or more heating elements and a feeding device in the form of a conveyor configured to transport a plurality of billets through the heating apparatus as a single-lane series along a billet transport path.

The billet thermoforming system further comprises a discharge system adapted to evacuate each article from the billet thermoformer, and a rotary inspection system configured to inspect each article/container formed from a billet.

The system includes a checking device in the form of an inspection system operable for detecting the presence of a defect in the container. The inspection system includes one or more inspection cameras, such as a multiplexed charged-coupled device (CCD) cameras, which capture an image of the container suitable for the inspection system to analyze the container for the presence of the defect. A computer automatically analyzes each image for the presence of defects using defect-detection algorithms. US 2013/048467 A1 however does not provide any details about the defect-detection algorithms that are used to analyze each image. If a defect is detected, the container may be discharged as a reject. If no defect is detected, the container may be discharged to a conveyor or other location where containers that pass inspection are collected. According to US 2013/048467 A1, other analyzing tools may be used in addition to or in place of the camera inspection system. For example, the three-dimensional profile of the container may be scanned or measured with a laser or other device. The observed three-dimensional profile may be compared with a predesignated profile.

In prior art document JP 2004/279287 A a method of detecting the molding defect in carrier tape for an electronic component reflecting luminous energy of light in a periphery of an embossed bottom part, is described.

Document KR 102 253 385 B1 describes a defective multi-packaged product detection system which includes a photographing device, an artificial intelligence model, and a rejector, to detect and reject defective multi-packaged products quickly and accurately.

Document KR 2021 0122429 A, instead, describes a method and a system for automatic defect detection in cosmetic container printing manufacturing process based on AI using vision deep learning.

In this context the technical purpose which forms the basis of this invention is to make a thermoforming apparatus and define a method for making a container by thermoforming which at least partly overcome the above-mentioned disadvantages.

In particular the technical purpose of this invention is to make a thermoforming apparatus and define a method for making a container by thermoforming which allow the use of a thermoformable film whose thickness is less than those in the prior art, obtaining a thermoformed container with quality similar to those currently produced.

The technical purpose and the aims indicated are substantially achieved by a thermoforming apparatus, by a method for making a container by thermoforming and by the container made in this way, as set out in the appended independent claims.

Particular embodiments of this invention are defined in the corresponding dependent claims.

Further features and the advantages of this invention will be more apparent in the detailed description of several preferred, non-limiting embodiments of a thermoforming apparatus, of a method for making a container by thermoforming which are illustrated in the accompanying drawings, in which:
- Figure 1 is a schematic top view of a first embodiment of a thermoforming apparatus according to this invention;
- Figure 2 is a schematic top view of a second embodiment of a thermoforming apparatus according to this invention;
- Figure 3 is a side view of a part of the thermoforming apparatus of Figure 1;
- Figure 4 is an enlarged vertical section of the detail IV of the container of Figure 3;
- Figure 5 is a schematic illustration of an expected image of a container which is free of defects seen from above;
- Figure 6 is a schematic illustration of a top view image of a defective container acquired by a checking device which is part of an apparatus according to this invention;
- Figure 7 is a schematic side view of a checking device which is part of a thermoforming apparatus according to this invention; and
- Figure 8 is a schematic top view of the checking device of Figure 7.

With reference to the above-mentioned figures, the numeral 1 denotes in its entirety a thermoforming apparatus according to this invention.

The following is a description first of the method for making a container 2 by thermoforming, followed by a description of the thermoforming apparatus 1 for making the container 2 by thermoforming a thermoformable film 3.

The main innovative aspect of this invention consists of having introduced a check of the quality of the thermoformed containers 2, and in particular at least of one layer of them, whose features (for example the barrier layer) are to be checked. This check is based, on one hand, on the insertion of an indicator into a first layer 4 of plastic material of the thermoformable film 3 used to make the thermoformed container 2, where the first layer 4 of plastic material of the thermoformable film 3 is that which will have to constitute the layer of interest of the container 2, and on the other hand, on the check relating to the presence of the indicator in the thermoformed container 2. In the context of this invention, the definition "indicator" means a substance inserted into the composition of the layer of interest of the thermoformable film 3, preferably evenly distributed in it, which emits electromagnetic radiation in an expected response band when it is excited with electromagnetic radiation in a predetermined excitation band.

In more detail, the indicator is inserted into a first layer 4 of plastic material of the thermoformable film 3 and, since the container 2 is obtained by thermoforming this film, even the container 2 comprises the first layer 4 of plastic material with the indicator. In fact, the container 2 comprises the same layers of which the thermoformable film 3 is constituted. The only difference is that the thermoforming causes stretching of the thermoformable film 3 and, consequently, in the container 2, the first layer 4 of plastic material has, at least locally, a thickness which is less than that which it had in the thermoformable film 3.

Hereinafter, the term first layer 4 will be used both with regard to the thermoformable film 3, and with regard to the container 2 in which it has been thermoformed.

It should be emphasised that, according to this invention, the check of the quality can also be performed on containers 2 which comprise the thermoformable film 3 which is thermoformed and coupled to a support. Even in containers 2 of this type the check is performed on the first layer 4 of plastic material. It must be emphasised that the support to which the thermoformable film 3 is coupled, may be of any type and material.

In particular, the support may be constituted of materials comprising, in general, cellulose and/or vegetable fibres. For example, the support may be constituted of cardboard and/or of cellulose moulded fibre. In some embodiments, the support may be constituted of a paper and cardboard industry article, that is to say, a cellulose material-based article (such as paper or paperboard). For example, it may be constituted of a single sheet, folded and/or shaped and/or glued on itself, or of two or more sheets which are folded and/or shaped and/or glued or constrained to each other).

However, in other embodiments, the support may be constituted of different materials, for example of a plastic material-based article or of a metal material-based article (such as aluminium). Supports constituted of an article based on multiple different materials (such as, for example, cellulose material and plastic material) are also possible.

Moreover, this invention is not limited by the type of support, since it may be transparent, coloured, moulded, with text, etc.

Moreover, even the thermoformable film 3 may comprise different types of material. For example, the thermoformable film 3 may comprise, or may be constituted of, a fossil-based plastic material or a bio-based plastic material. In any case, the features of the support are not important or limiting for this invention; it may be of any type and an expert in the sector will be capable on each occasion of selecting the support suitable for his or her own needs. Therefore, even if for the sake of simplicity below reference will be made only to the case of containers 2 entirely made by thermoforming, that shall not be understood as limiting for this invention.

In the practical implementation of this invention, the indicator inserted into the first layer 4 is excited with electromagnetic radiation in the predetermined excitation band and electromagnetic radiation emitted by the indicator in the expected response band is detected. By analysing this electromagnetic radiation detected, it is possible to determine if the first layer 4 of plastic material of the thermoformed container 2 has defects 7 (and the container 2 is therefore defective and to be rejected) or does not have defects 7 (and the container 2 is therefore suitable and usable).

In preferred applications, in particular, the first layer 4 of plastic material containing the indicator is the barrier layer, that is to say, the layer suitable for constituting a barrier to oxygen. According to this invention, advantageously, in this case the thickness of the first layer 4 is between 0.5 µm and 10 µm, preferably less than or equal to 5 µm, even more preferably between 2 µm and 3 µm. For example, the first layer 4 of plastic material comprises, and preferably is constituted of, EVOH.

However, in other embodiments, the thermoformable film 3 may comprise a different type of barrier layer, for example which comprises or which is constituted of a AlOx coating.

Further embodiments are also possible, for example in which the thermoformable film 3 is obtained by coupling two or more co-extruded films. This invention may be applied both in containers 2 comprising a plurality of layers 5, and in containers 2 constituted of a single layer.

In this latter case, the single layer corresponds to the first layer 4 containing the indicator.

In the applications in which, in contrast, the containers 2 comprise the plurality of layers 5, based on requirements it is possible to insert an indicator both into a single layer (for example the barrier layer) and into multiple layers 5 (therefore, in addition to the first layer 4 of plastic material, at least one other layer which comprises the indicator will be present). In this latter case, the indicator may be the same in all of the layers 5 affected, or it may be the case that different indicators are inserted into different layers 5 (in these solutions, in addition to the first layer 4 of plastic material, at least one other layer which comprises an indicator will be present). The term different indicators means substances which emit electromagnetic radiation in different expected response bands when they are excited with electromagnetic radiation in a same predetermined excitation band, or substances which emit electromagnetic radiation in the same expected response band when they are excited with electromagnetic radiation in different excitation bands, or substances which each have their own pair of expected response and predetermined excitation bands.

If the same indicator is inserted into different layers 5, it is possible to check the overall quality of all of the layers 5 into which the indicator is inserted. That is useful for obtaining a general picture of the quality of the container 2 as a whole. In contrast, if different indicators are inserted into different layers 5, it is possible to check the quality of all of the layers 5 of the container 2 independently. That is particularly useful if the layers 5 of the container 2 perform functions which are different from each other.

The ways in which this type of check is carried out, in both of the embodiments, are described in detail below.

For the sake of simplicity, hereinafter particular attention will be paid to the case in which the indicator is present in a single first layer 4. It can all be appropriately adapted by a person who is an expert in the sector if, in contrast, two or more layers 5 are affected.

Advantageously, the first layer 4 of plastic material in which the indicator is present extends for the entire extent of the container 2. In the preferred embodiments, the indicator is a substance distributed inside the first layer 4 of plastic material in such a way that the entire layer contains the indicator. Advantageously, the indicator is evenly distributed inside the first layer 4 of plastic material. However, if appropriate, and based on application requirements, it is also possible that the indicator is not evenly distributed in the first layer 4 of plastic material; for example, the indicator may be present with higher concentrations in some portions of the first layer 4 of plastic material of the container 2 and with lower concentrations in others portions of the first layer 4 of plastic material of the container 2.

The following is a detailed description of the method for making a container 2 by thermoforming.

First, that method comprises a feeding step, in which the thermoformable film 3 is fed to a thermoforming device 6. The thermoformable film 3 comprises at least the first layer 4 of plastic material in which the indicator previously described is distributed.

Second, the method comprises a thermoforming step followed by a checking step.

In the thermoforming step, the thermoformable film 3 is thermoformed by means of the thermoforming device 6, to obtain the container 2; in this way the container 2 comprises the first layer 4 of plastic material.

In contrast, the checking step in turn comprises an emitting sub-step in which electromagnetic radiation is emitted in the predetermined excitation band towards the container 2, and a simultaneous receiving sub-step in which there is detection of the electromagnetic radiation in the expected response band, emitted by the first layer 4 of plastic material of the container 2 as a result of the excitation due to the electromagnetic radiation in the predetermined excitation band. Then the checking step comprises an examining sub-step in which information about the electromagnetic radiation detected in the expected response band is examined, to detect the presence or absence of defects 7 in the first layer 4 of plastic material of the container 2. In the context of this invention, the term "defects" 7 of the first layer 4 of plastic material of the container 2, means the presence of one or more zones of the container 2 in which the thickness of the first layer 4 of plastic material is outside a predetermined suitability range. Advantageously, the predetermined suitability range may be defined exclusively by a lower threshold value below which the thickness of the first layer 4 of plastic material must not fall. By way of example, that lower threshold value may be between 0.5 µm and 10 µm, preferably less than 5 µm, even more preferably between 2 µm and 3 µm if the first layer 4 of plastic material containing the indicator is the barrier layer. Examples of possible defects 7 are, for example, holes in and thinning of the first layer 4 of plastic material due to excessive stretching of the thermoformable film 3 during the thermoforming.

In the context of this description the containers 2 which have defects 7 are referred to as defective containers 2, whilst the containers 2 which do not have defects 7 are referred to as suitable containers 2.

If the container 2 comprises the plurality of layers 5, with different indicators inserted into different layers 5, the checking step is more structured. In particular, if the container 2 comprises a plurality of layers 5 of plastic material (X layers 5) inside each of which a different indicator is inserted, then X emitting sub-steps and X receiving sub-steps must be carried out, with each of the receiving sub-steps being carried out simultaneously with the respective emitting sub-step. Depending on how the different bands have been selected, the different emitting sub-steps and the different receiving sub-steps may be carried out one after another or at least partly simultaneously. If, in contrast, the container 2 comprises a group of layers 5 of plastic material into which there has been inserted the same indicator or different indicators which emit electromagnetic radiation in the same expected response band as a result of the excitation due to the electromagnetic radiation in the same predetermined excitation band, it is possible to carry out a smaller number of emitting sub-steps (and of respective receiving sub-steps): in fact, for each group of layers 5 of plastic material, it is possible to perform a single emitting sub-step (and the receiving sub-step).

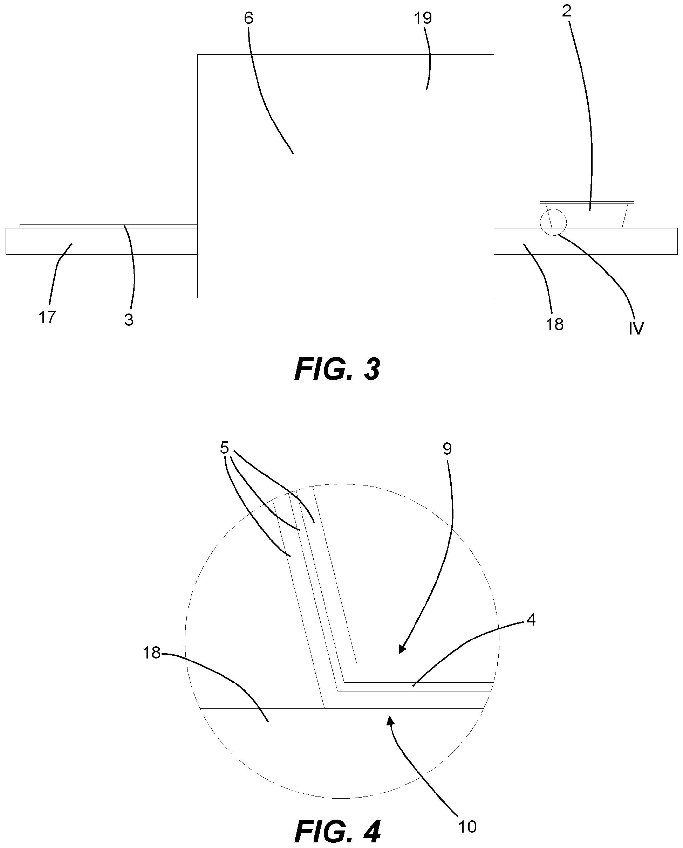

In general, when the container 2 comprises a plurality of layers 5 of plastic material, it is necessary that any layers 5 of plastic material which are placed, relative to the first layer 4 of plastic material with the indicator, on the side of the container 2 on which the emitting sub-step and the respective receiving sub-step are performed (as shown in Figure 4), are at least partly transparent both to the electromagnetic radiation in the predetermined excitation band, and to the electromagnetic radiation in the expected response band. In this way at least part of the electromagnetic radiation emitted reaches the layer of plastic material considered, and at least part of the electromagnetic radiation consequently emitted by the first layer 4 of plastic material can be detected.

According to one embodiment of the method, the receiving sub-step is carried out by acquiring at least one image of the container 2 (hereinafter referred to as the acquired image 8), and the information about the electromagnetic radiation in the expected response band used in the examining sub-step is constituted of the at least one acquired image 8.

In some embodiments, acquisition of the acquired image 8 is performed from a position which allows the obtainment of an image representative of the entire extent of the first layer 4 of plastic material. For example, it is possible that the acquisition is performed from above the container 2 from a position and a distance which are such that the acquired image 8 is representative of the entire container 2. In other words, considering that in a container 2 two main surfaces can be identified, an inner surface 9 (that of the side configured to receive the product) and an outer surface 10 (that of the opposite side), the acquired image 8 may correspond to an image of the entire inner surface 9. In alternative embodiments, the acquisition may alternatively be performed from below (unless the container 2 comprises a support which is not transparent); in that case the acquired image 8 may correspond to an image of the entire outer surface 10.

Advantageously, the acquisition is performed at the centre of the container 2, perpendicularly to it (that is to say, that an optical axis of a system used for the acquisition is perpendicular to a lying plane of the container 2 at its centre).

Moreover, the observation line 11 is selected in such a way that no hidden parts of the first layer 4 are present and in such a way that no portion of the container 2 (for example its lateral walls 12) has an inclination which is too small relative to the position from which the receiving sub-step is performed (in fact, theoretically, the best acquisition could be obtained by observing each point of the first layer 4 perpendicularly to the first layer 4 itself at that point. In fact, otherwise, the acquired image 8 could show the first layer 4 in a nonoptimal way.

In contrast, in other embodiments, the acquisition of the acquired image 8 may be performed in pieces which are then combined. In particular, it may be performed in such a way as to gradually obtain images each showing a portion of the first layer 4 of plastic material of the container 2. In this case, images of all of the portions of the first layer 4 of plastic material of the container 2 are acquired in sequence (it is possible that the images of the portions are images of portions of the first layer 4 of plastic material of the container 2 slightly overlapping each other - in the preferred case - or images of portions of the first layer 4 of plastic material of the container 2 which are adjacent to each other). During the examining sub-step, the acquired image 8 of the first layer 4 of plastic material of the entire container 2 is obtained by processing and combining the various images, acquired in sequence, of the portions of the first layer 4 of plastic material of the container 2, for example using normal image reconstruction algorithms.

In some embodiments, the emitting sub-step and the receiving sub-step may be performed inside a space which is protected (preferably completely, but at least partly) from possible interference due to external sources of electromagnetic radiation, such as light sources. That protected space may be created for performing the emitting and receiving sub-steps inside a chamber shielded from external light radiation. That is advantageous because it allows a reduction in the probability that such interference might alter the detection of the electromagnetic radiation in the expected response band emitted by the first layer 4 of plastic material of the container 2 during the receiving sub-step.

In the examining sub-step the presence or absence of any defects 7 in the first layer 4 of plastic material, is determined by means of a processing of the acquired image 8.

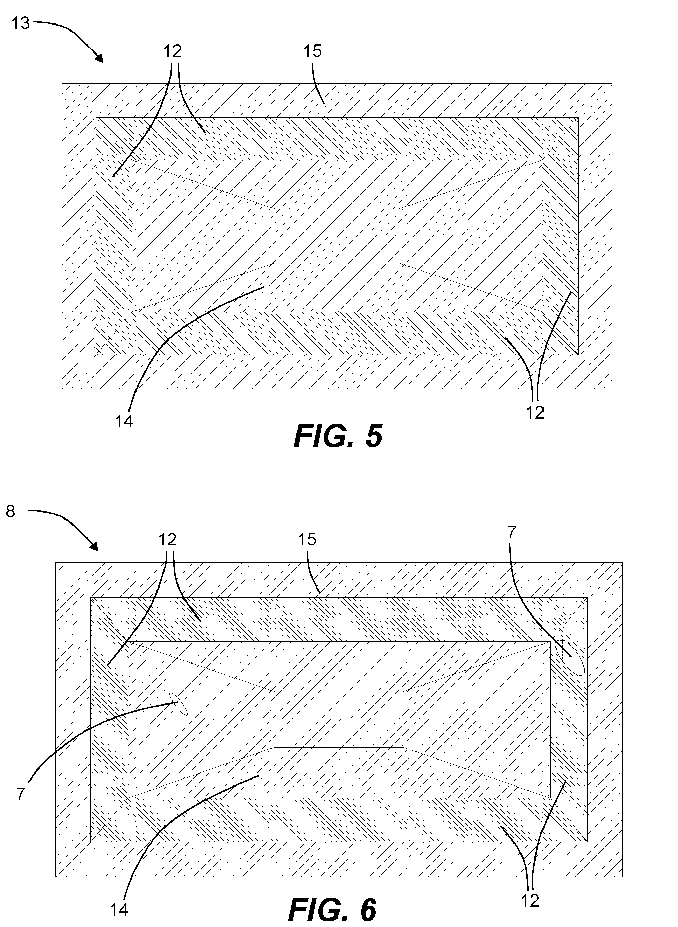

In some embodiments, during the examining sub-step the acquired image 8 is processed by means of at least one image processing algorithm based on a comparison between the acquired image 8 (shown, for example, in Figure 6 - an image in which several defects 7 are present) and an expected image 13 of the container 2 which shows a container 2 free of defects 7 (shown, for example, in Figure 5). In other words, the expected image 13 corresponds to the image which could be acquired whenever the container 2 being examined is free of defects 7. The expected image 13 saved is in fact an image which shows a container 2 for which it is known that the first layer 4 of interest is free of defects 7.

Preferably, the expected image 13 corresponds to a container 2 in which the first layer 4 has a known trend of the thickness in the different zones of the container 2, a trend which, preferably, is an optimum trend previously determined. Since the indicator is advantageously distributed in a known way in the material of the first layer 4 of the thermoformable film 3, a predetermined trend of the thickness of the first layer 4 in the container 2 corresponds to a known distribution of the indicator in the first layer 4.

Both the acquired image 8, and the expected image 13 have at each point (pixel) an intensity of the electromagnetic radiation (in the expected response band) which depends on the total quantity of indicator present in the portion of the first layer 4 to which that point (pixel) of the image corresponds. Consequently, the concentration of the indicator in the material of the first layer 4 being equal, the greater the thickness of the first layer 4 is, the greater the intensity of the electromagnetic radiation in the expected response band is. More precisely, the thickness to be considered is not the thickness of the first layer 4 measured perpendicularly to its extent, but the thickness of the first layer 4 measured along the line of propagation of the electromagnetic radiation which each pixel of the image generates. Therefore, the thickness being equal, a portion observed along a line which forms an angle α (for example equal to 60°) relative to the perpendicular, has an apparent thickness equal to the real thickness divided by cos α (in the example, a double thickness).

Consequently, in the expected image 13, even if the indicator is constantly distributed in the portions of the first layer 4 of plastic material present on the bottom wall 14, on the lateral walls 12 and on the flange 15 of the container 2, the intensities of the electromagnetic radiation in the expected response band may be very different between the portions which are flat and perpendicular or almost perpendicular to the optical axis, and those inclined relative to the perpendicular, with intensities which depend on their inclination.

If the observation point is far away enough from the container 2 and is placed along an axis perpendicular to the resting plane of the container 2 passing at the centre of the container 2 itself, the angle formed by the observation line 11 relative to the perpendicular is small and the apparent thickness is practically equal to the real thickness. The image which is obtained is therefore similar to that schematically illustrated in Figure 5, with the highest intensity at the inclined lateral walls 12.

Similar assessments apply for the acquired image 8 for which, however, the trend of the thickness of the first layer 4 of plastic material of the container 2 is unknown. Moreover, the acquired image 8 may relate to a container 2 in which the first layer 4 has defects 7.

Possible defects 7 are for example, as already indicated, holes or excessive thinning of the thickness: at these defects 7, in the acquired image 8 we notice an intensity of the electromagnetic radiation received in the expected response band, less than that of the expected image 13; that is due to a smaller total quantity (in the case of thinning) or the absence (in the case of a hole) of indicator in the corresponding portion of the first layer 4. Holes and thinning may occur both in the first layer 4 of plastic material of containers 2 entirely obtained by thermoforming the thermoformable film 3, and in the first layer 4 of plastic material of containers 2 obtained by thermoforming the thermoformable film 3 and coupling it to a support.

In order to be able to perform the comparison, the acquired image 8 and the expected image 13 are advantageously acquired from a same viewpoint relative to the container 2, or are resized and/or cut in such a way that the containers 2 visible in them have the same dimensions and the same position, as if they had been acquired from that same viewpoint.

The image processing algorithm may be based on a comparison between the intensities of the images. That comparison may be performed on the entire image, but preferably it is performed either by comparing the intensities of corresponding individual pixels (which have the same position relative to the image) or by comparing zones of the image with each other, for example constituted of groups of adjacent pixels.

According to one possible algorithm during the examining sub-step the following steps are carried out: the images are divided into zones (for example they are divided based on the pixels) and the various zones of the images are associated with each other in such a way that each zone of the acquired image 8 corresponds to the respective zone of the expected image 13; both the intensity of the zones of the acquired image 8 and the intensity of the zones of the expected image 13 are assessed; a difference between the intensity of the zones of the acquired image 8 and that of the respective zones of the expected image 13 is calculated; the absolute value of the difference obtained is compared with a maximum permitted difference, which is substantially a predetermined maximum threshold. The container 2 is considered defective if the difference in the intensity of one zone - or multiple zones - is greater than the maximum permitted difference, whilst it is considered suitable if the difference in the intensity of all of the zones is less than the maximum permitted difference. In fact, exceeding the maximum permitted difference is considered indicative of the presence of a defect 7.

In some applications supplied as output is a first signal for indicating a defective container 2 or a second signal for indicating a suitable container 2. The algorithm described is just one example of the possible algorithms based on the comparison between the acquired image 8 and the expected image 13 which can be used. Therefore, algorithms are possible which are based on different types of comparison and/or which have different steps. Therefore, the algorithm used shall not be understood as limiting for this invention.

According to some embodiments, during the checking step the acquired image 8 is processed by means of an algorithm based on artificial intelligence, in particular advantageously selected from a group comprising: algorithms based on supervised learning techniques, algorithms based on unsupervised learning techniques, algorithms based on reinforcement learning techniques. Examples of algorithms based on artificial intelligence which can be used are: neural networks (such as feed-forward neural networks, CNN convolutional neural networks, U-Net convolutional neural networks, BN Bayesian networks, RNN recurrent neural networks), linear regression, logistic regression, GAN generative adversarial networks, cycleGAN, VAE-GAN, Bayesian classifiers, SVM support vector machines and algorithms derived from them (such as SVC, structured SVM, transductive SVM and multiclass SVM), K-nearest neighbors k-NN, random forest, Q-learning, Trust Region Policy Optimization TRPO, Proximal Policy Optimization PPO, Deep Q Neural Networks DQNN.

If during the checking step the acquired image 8 is processed by means of an algorithm based on artificial intelligence, before using the algorithm it is necessary to carry out a training step to set the algorithm itself. During the training step data is supplied to the algorithm, which may be input data and output data, and if necessary other data such as intermediate data.

In the training step the following sub-steps: can be performed, in the order indicated:
- a data generating sub-step, in which samples are created both for the training, and for the algorithm test (used in the following sub-steps); in particular, the data is images of defective containers 2 and images of suitable containers 2;
- a training sub-step, in which the algorithm is trained using the samples for training created in the data generating sub-step; in this sub-step the images of the defective containers 2 and of the suitable containers 2 are subjected to the algorithm advantageously together with the expected output for each of them (suitable or defective container 2); and
- a verifying sub-step, in which the effectiveness of the algorithm is verified using the samples for the test created in the data generating sub-step; in this sub-step the algorithm outputs are compared with the known outputs which are expected to be received.

Aspects strictly linked to algorithms based on artificial intelligence and to learning techniques for those algorithms (methods on which the techniques are based, differences between various techniques, etc.) are however aspects which are themselves known to a person expert in the sector and will not be described in further detail. Moreover, an expert in the sector is capable of adapting what has been described to the various types of algorithms based on artificial intelligence.

**It** should be emphasised that during the examining sub-step it is possible that the acquired image 8 is processed by means of the image processing algorithm based on the comparison between the acquired image 8 and the expected image 13 or that the acquired image 8 is processed by means of the algorithm based on artificial intelligence. It is also possible that the two types of processing described are combined with each other: the acquired image 8 may be processed both by means of the image processing algorithm based on the comparison between the acquired image 8 and the expected image 13, and by means of the algorithm based on artificial intelligence (in this order or in the reverse order).

In some preferred embodiments, during the emitting sub-step electromagnetic radiation is emitted in a predetermined excitation band which comprises the ultraviolet band. In some cases, the predetermined excitation band is constituted of the ultraviolet band. In these embodiments, the indicator is a fluorescent-based substance and may comprise at least one element selected from a group constituted of: ultraviolet indicator, infra-red indicator, dye, pigment, optical brightener, fluorescent brightening agent, anthraquinone dye, 2,2'-(2,5-thiophenylenediyl)bis(5-tert-butylbenzoxazole), hydroxyl-4- )p-tolylamino)anthracene-9,10-dione, 2,5-thiophenediylbis(5-tert-butyl-1,3- benzoxazole).

In other embodiments, it is possible that the indicator is a phosphorescent-based substance; in this case, in contrast, during the emitting sub-step electromagnetic radiation may be emitted in a predetermined excitation band which comprises a band different from that of ultraviolet, such as the infra-red band.

In the preferred embodiments, the first layer 4 of plastic material emits electromagnetic radiation in an expected response band which comprises the visible band. However, in other embodiments the first layer 4 of plastic material may emit electromagnetic radiation in an expected response band which comprises a different band, such as the ultraviolet band or the infra-red band.

In some embodiments, the method comprises a step of monitoring performance of the method itself, in which data about the production of defective containers 2 is saved and examined, such as data about the quality of the container 2 (that is to say, about the presence or absence of defects 7 identified in the first layer 4 of plastic material). In particular, during the monitoring step the data about the quality of the containers 2 determined in the examining sub-step is saved and examined. That is also applicable to a group of containers 2: each time the checking step is performed the data about the quality of the container 2 is saved. Therefore, during successive monitoring steps, the data about the quality of a group of thermoformed containers 2 is saved and examined. In more detail, the phrase "data about the quality of the container" 2 means data relating to the presence (or absence) of defects 7, such as the number of defects 7, the type of defects 7 and the position of these defects 7.

In some embodiments this data is used to process statistics about operation of the thermoforming device 6.

In some embodiments, the method comprises an optimising step during which the data saved about the quality of a group of containers 2 thermoformed by the thermoforming device 6, saved during successive checking steps and examined during the monitoring step, is processed to identify any problems of the thermoforming step and/or to vary operating parameters of the thermoforming device 6.

Essentially, for each thermoformed container 2 belonging to the group of containers 2 (which may comprise more or less containers 2 or even all of the containers 2 gradually made), the checking step is performed and the data about the quality of the container 2 is saved. The group of containers 2 may also be a dynamic set which contains the last N containers 2 made (for example the last one hundred or one thousand containers 2).

After the checking and monitoring steps have been carried out (on a group of containers 2 or periodically), the optimising step is performed. During this step, the data saved during the monitoring step is processed. Based on the results of this processing, any problems are identified and it is possible to vary the operating parameters of the thermoforming device 6 to solve those problems.

The processing of the data saved may comprise determining the incidence of a particular problem or a problem in a predetermined point of the container 2. For example, a group of X containers 2 is considered for each of which the checking step is performed and during the monitoring step the data about quality is saved. Then the optimising step is performed, in which this data is processed, and an assessment is made to determine if there is a percentage of the thermoformed containers 2 which is higher than a predetermined warning threshold, which has the same defect 7 in roughly the same position (for example a hole in the first layer 4 of plastic material of the container 2 on the bottom wall 14, or a thickness which is too thin at an edge). If so, during the optimising step the operating parameters of the thermoforming device 6 are varied, advantageously automatically (by means of a dedicated software); for example, since a hole or excessive thinning are generally caused by excessive localised stretching, the temperature may be lowered by a predetermined value (for example 1°C), either for the entire thermoforming device 6, or for the part nearest to the defect 7, to optimise the thermoforming and to thereby reduce the number of defective containers 2. Depending on the embodiments, the features of the thermoforming device 6 and the type of problem encountered, a person expert in the sector will know how to set the most appropriate type of correction of the operating parameters of the thermoforming device 6.

After each variation of the operating parameters of the thermoforming device 6, the thermoforming method is implemented again once or a plurality of times and monitoring of the quality of the containers 2 advantageously continues; therefore, the steps described above are carried out again, and there is a new assessment to determine if there is a percentage of containers 2 for which the same defect 7 was detected which is higher than the predetermined threshold. If not, the percentage of defective containers 2 is considered to be acceptable and it is possible to keep these operating parameters of the thermoforming device 6; in contrast, if the predetermined threshold was exceeded again, the percentage of defective containers 2 is not acceptable and it is therefore possible to again vary the operating parameters of the thermoforming device 6 (for example again modifying the temperature or other parameters such as the air pressure or the speed with which the pressure varies). This is then advantageously repeated, keeping production of the containers 2 monitored.

The example described relates to a case in which the same defect 7 is present in a same position for all of the defective containers 2. However, what was described may be applicable if different defects 7 are present in a same position for all of the defective containers 2, and if the same defect 7 is present in different positions for the defective containers 2, and if there are different defects 7 in different positions for the defective containers 2.

Advantageously, the optimising step (and the resulting repetitive process) may be carried out during the setting up of the thermoforming apparatus 1. That allows the thermoforming process to be optimised directly during the installation step.

However, it may also be useful to perform the optimising step either periodically (depending on the number of thermoformed containers 2) or as a result of reaching a threshold value for the total number of defective containers 2 identified (assessment of whether the threshold has been reached may be performed by simply counting the number of containers 2 rejected in a predetermined period of time and comparing it with a maximum acceptable value, which is the threshold value), or continuously during performance of the thermoforming method.

In some embodiments, the method also comprises an unloading step, in which the thermoformed containers 2 are mechanically moved towards an outfeed station 16; in these embodiments, the checking step is advantageously carried out during the unloading step. It is possible to have both embodiments in which the checking step is carried out when the container 2 is moving towards the outfeed station 16, and embodiments in which the checking step is carried out when the container 2 is stationary. In the latter case, for example, upstream of the outfeed station 16 the container 2 is stopped to perform the checking step.

In some embodiments, the method also comprises a rejecting step, which is performed after the checking step. During the rejecting step the containers 2 for which, during the checking step, at least one defect 7 in the first layer 4 of plastic material of the container 2 was detected (that is to say, the defective containers 2) are rejected.

As already indicated, this invention also relates to the container 2 obtainable with the method described herein, that is to say, a suitable container 2 which comprises inside it at least one first layer 4 of plastic material equipped with the indicator.

The following is a description of the thermoforming apparatus 1 according to this invention, which allows a container 2 to be made by thermoforming the thermoformable film 3 previously described. Both the thermoformed container 2 and the thermoformable film 3 have previously been described in detail and will not be further described below.

First, the thermoforming apparatus 1 comprises a thermoforming device 6 which is configured to thermoform the thermoformable film 3.

In turn the thermoforming device 6, similarly to those in the prior art, preferably comprises a shaped mould and a closing element, with the shaped mould defining a housing substantially shaped like the container 2 to be made, that is to say, the housing substantially traces the shape of the outer surface 10 of the container 2. The shaped mould and the closing element are movable, at least one relative to the other, between a home position and an operating position. When they are in the home position, the shaped mould and the closing element are uncoupled and at a distance from each other. In contrast, when they are in the operating position, the shaped mould and the closing element are coupled and near each other. In particular, in use, in the operating position the shaped mould and the closing element clamp the thermoformable film 3 between them.

Advantageously, the thermoforming device 6 also comprises one or more heating elements, which are associated with at least one of either the shaped mould or the closing element; the heating elements are configured to heat, in use, the shaped mould and/or the closing element with which they are associated. In the preferred embodiments, the heating elements are associated with the closing element, and they heat only the closing element against which, in use, the thermoformable film 3 initially rests. However, other embodiments are possible in which the heating elements heat either only the shaped mould or both the shaped mould and the closing element.

This invention can be applied both if the thermoforming device 6 is configured to make the container 2 by means of a process for vacuum thermoforming the thermoformable film 3, and if the thermoforming device 6 is configured to make the container 2 by means of a process for thermoforming under pressure the thermoformable film 3.

In the known way, in the former case the thermoforming device 6 comprises suitable vacuum creating means, associated with the shaped mould, for creating in the shaped mould a vacuum which allows the container 2 to be made by thermoforming the thermoformable film 3. In contrast, in the latter case, the thermoforming device 6 comprises suitable pneumatic means, advantageously associated with the closing element, for creating a pressure which allows the container 2 to be made by thermoforming the thermoformable film 3.

In some embodiments, the thermoforming device 6 comprises an extracting device which is associated with the shaped mould for extracting the thermoformed container 2 from the self-same shaped mould when the shaped mould and the closing element are in the home position.

In some embodiments, the extracting device is advantageously movable relative to the shaped mould between a retracted position and an extracted position. In the retracted position, the extracting device is pulled back into the shaped mould in such a way as to leave the housing free for the container 2, whilst in the extracted position the extracting device projects inside the housing; passing from the retracted position to the extracted position causes extraction of the container 2 from the shaped mould.

The aspects strictly linked to the thermoforming device 6, like all of the possible alternative embodiments, are in any case known to an expert in the sector and will not be described in further detail. For this reason, the elements previously described which are part of the thermoforming device 6, are not shown in the figures.

In any case, it must be emphasised that what has been described with regard to the thermoforming device 6 (such as, for example, the type of thermoforming by means of which the container 2 is made and the type of extracting device) shall not be understood as limiting for this invention.

The thermoforming apparatus 1 also comprises a feeding device 17 and a conveyor 18, which are both associated with the thermoforming device 6. In the embodiments illustrated, both the feeding device 17 and the conveyor 18 are shown only schematically in the figures and define a movement path. However, depending on the embodiments they may adopt various different structures (all known in themselves and known to an expert in the sector).

In particular, the feeding device 17 is associated with the thermoforming device 6 for feeding, in use, the thermoformable film 3 to the thermoforming device 6, whilst the conveyor 18 is associated with the thermoforming device 6 for receiving, in use, the thermoformed container 2 and moving it towards an outfeed station 16. The container 2 can be transferred from the thermoforming device 6 to the conveyor 18 in any way.

Moreover, the thermoforming apparatus 1 comprises a checking device 19 which is operatively associated with at least one of either the thermoforming device 6 or the conveyor 18 for detecting defects 7 of the first layer 4 of plastic material present in the container 2. In detail, saying that the checking device 19 is operatively associated with the thermoforming device 6 or with the conveyor 18 means that it is positioned in such a way as to perform the above-mentioned emitting and detecting steps on the thermoformed container 2, while the container 2 is located, respectively in the thermoforming device 6 or on the conveyor 18.

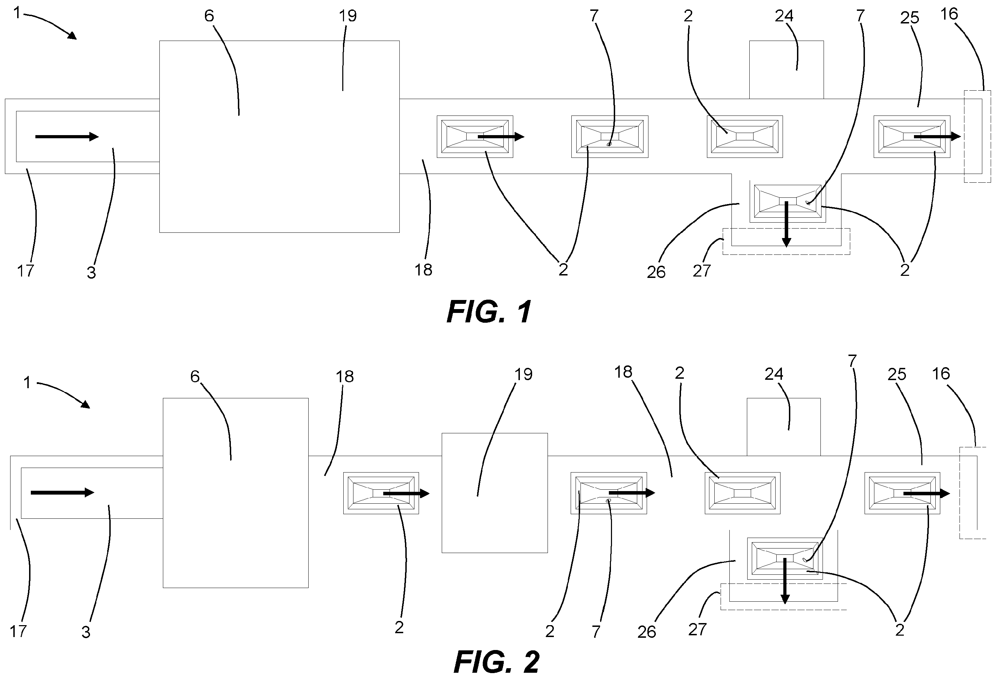

In the first embodiment, shown in Figure 1, the checking device 19 and the thermoforming device 6 are physically close and are integrated in a single component of the thermoforming apparatus 1. In this case, the checking device 19 may be placed either upstream of the thermoforming device 6 along the movement path, or downstream of the thermoforming device 6.

In the second embodiment, in contrast shown in Figure 2, the checking device 19 and the thermoforming device 6 are two separate components of the thermoforming apparatus 1. In this case, the checking device 19 is positioned downstream of the thermoforming device 6 along the movement path. In this case the checking device 19 is advantageously associated with the conveyor 18.

In turn the checking device 19 for checking the container 2 comprises an emitter 20 and a detector 21. The emitter 20 is configured to emit electromagnetic radiation in the predetermined excitation band and to direct it towards the container 2, whilst the detector 21 is configured to receive electromagnetic radiation emitted in the expected response band by the container 2, as a result of the excitation by the emitter 20.

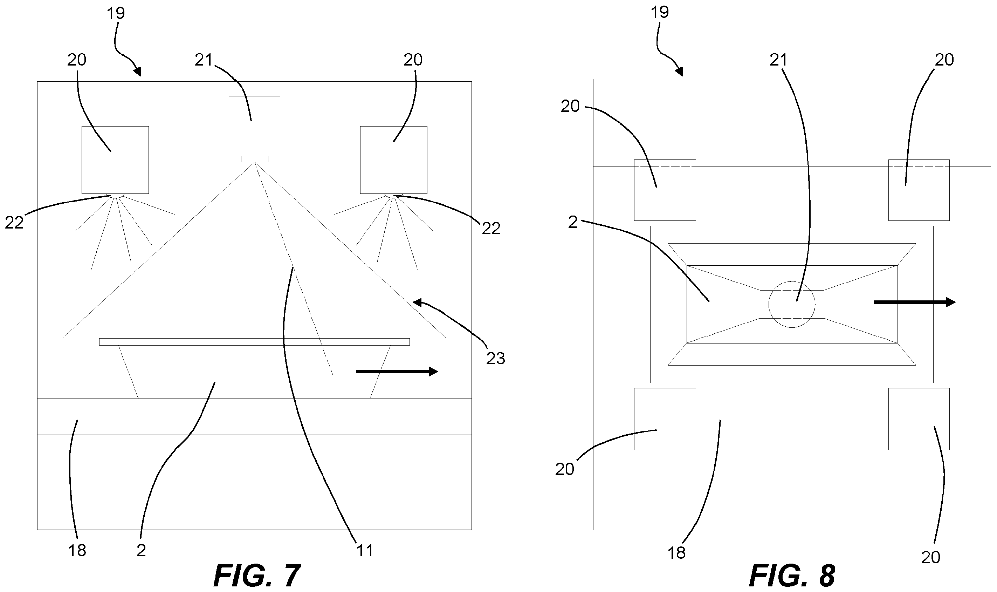

In some embodiments, such as that shown in Figures 7 and 8, in order to attempt to guarantee that the entire container 2 is irradiated evenly enough with the electromagnetic radiation there are four emitters 20 present, which are positioned substantially at the four vertices of a rectangle or of a square. A single detector 21 is placed at the centre of the rectangle or of the square, that is to say, at the point at which the diagonals of the rectangle or of the square intersect. However other embodiments are possible, for example in which a different number of emitters 20 and/or detectors 21 are present or in which the emitters 20 and/or the detector 21 are positioned differently from what is shown in the figures. Moreover, advantageously, the one or more emitters 20 and the one or more detectors 21 are positioned inside a casing which prevents, or which at least obstructs, possible interference due to external sources of electromagnetic radiation (such as for example light sources); this reduces the probability of this external interference being able to alter detection of the defects of the first layer 4 of plastic material present in the container 2. The casing is also configured and sized in such a way as to also contain each time, in use, the container 2 with which the one or more emitters 20 and the one or more detectors 21 interact. Several alternative embodiments are described below.

Moreover, the checking device 19 comprises an electronic processing unit, which is connected to the detector 21 for receiving from it, in digital format, information about the electromagnetic radiation received by the detector 21; moreover, the electronic processing unit is programmed to detect defects 7 present in the fist layer 4 of plastic material of the container 2 by means of a processing of the information received from the detector 21. The electronic processing unit may advantageously also be connected to the emitters 20 present for checking their activation. Advantageously the electronic processing unit is programmed to perform the examining sub-step and if necessary the monitoring step and the optimising step which are described above.

In the preferred embodiments, each emitter 20 advantageously comprises one or more lamps 22 (for example of the LED type) which have an emitting band which comprises the predetermined excitation band or which coincides with it, and if necessary one or more filters for selecting the predetermined excitation band.

In the preferred embodiments, the detector 21 has a plurality of observation lines 11 which come out of it. The observation lines 11 may extend parallel to each other, but preferably they diverge from each other gradually moving away from the detector 21. The expression "observation line" 11 means a line along which the detector 21 is configured to receive the electromagnetic radiation emitted in the expected response band; that means that each observation line 11 is inside the field of vision 23 of the detector 21.

The detector 21 is also positioned relative to the position in use adopted by the container 2 at the moment of the detection, in such a way that, in use, each observation line 11 intercepts the first layer 4 of plastic material of the container 2 (and advantageously, each layer of the container 2) only once.

Given that the container 2 is a single thermoformed sheet which has two main surfaces (an inner surface 9 and an outer surface 10), saying that each observation line 11 intercepts the first layer 4 of plastic material only once means that the detector 21 is positioned in such a way that (simultaneously or at successive moments) all of the zones of the inner surface 9 or of the outer surface 10 are visible in its field of vision 23.

In some embodiments, such as that illustrated in Figure 7 and 8, the detector 21 is configured and positioned to simultaneously receive electromagnetic radiation emitted by the entire first layer 4 of plastic material of the container 2. That means that the field of vision 23 of the detector 21 has an amplitude such that the detector 21 succeeds in simultaneously observing the entire thermoformed container 2 (more specifically, the entire inner surface 9 or the entire outer surface 10).

In some embodiments the detector 21 is advantageously positioned above the container 2, in such a way that along each observation line 11 of the detector 21 no element is interposed between the detector 21 and the container 2 which prevents the detector 21 from receiving the electromagnetic radiation emitted by the entire first layer 4 of plastic material of the container 2. One embodiment of this type is advantageous since it allows the detector 21 to receive the electromagnetic radiation emitted in the expected response band by the entire first layer 4 of plastic material of the container 2 in a single acquisition.

In other embodiments in which the detector 21 is associated with the conveyor 18 (as for example in the thermoforming apparatus 1 shown in Figure 2), the detector 21 may be configured and positioned to receive, at a predetermined moment, electromagnetic radiation emitted only by a portion of the first layer 4 of plastic material of the container 2 and not by the entire first layer 4 of plastic material. In this case, the detector 21 may also be configured to perform a plurality of successive detections while the container 2 is made to move forward by the conveyor 18, for receiving electromagnetic radiation emitted by all of the successive portions of the first layer 4 of plastic material of the container 2 which gradually enter its field of vision 23; in this way the detector 21 receives as a whole electromagnetic radiation emitted by the entire first layer 4 of plastic material of the container 2 and the checking device 19 is capable of checking the entire first layer 4 of plastic material. **In** particular, the detector 21 can receive the electromagnetic radiation emitted only by a portion of the first layer 4 of plastic material of the container 2 when interposed between the detector 21 and the container 2 there is a shielding element which has an opening with limited size: only the electromagnetic radiation emitted by the first layer 4 of plastic material which passes through the opening is received by detector 21 (therefore only that emitted by a portion of the first layer 4 of plastic material of the container 2). This situation may occur for example if the detector 21 is placed below the conveyor 18; advantageously the conveyor 18 will have an opening transversal to its extent, with a size smaller than that of the containers 2 which it must convey. In some of these embodiments it is possible that the detector 21 is configured to continuously detect the electromagnetic radiation in the expected response band and to continuously send the information about the electromagnetic radiation received to the electronic processing unit.

In other possible embodiments, the detector 21 can be configured to perform the detections at regular time intervals set depending on the conveying speed of the conveyor 18. For example, it is possible either that the successive detections are performed in such a way as to receive electromagnetic radiation emitted by partly overlapping portions of the first layer 4 of plastic material (preferred solution), or that successive detections are performed in such a way as to receive electromagnetic radiation emitted by adjacent portions of the first layer 4 of plastic material (that is to say, which only share the edge).

In some embodiments, the detector 21 can be configured to perform the detections at irregular time intervals set depending on the position of the container 2, in this case too in such a way as to receive radiation from portions which on each occasion are partly overlapping or adjacent. In particular, the checking device 19 may also comprise a trigger element connected to the electronic processing unit for detecting, for example, the arrival of the container 2 in a predetermined position, in such a way that the electronic processing unit consequently activates the detector 21 (and if necessary the emitter 20).

What was described with reference to the detector 21 associated with the conveyor 18, is advantageously performed while the conveyor 18 moves the container 2 along the movement path, without stopping it when the detector 21 performs the detections for receiving the electromagnetic radiation. However, in some embodiments, it is also possible that the conveyor 18 stops the container 2 and that the detector 21 receives the electromagnetic radiation emitted in the expected band by the portion of the first layer 4 of plastic material of the container 2 within its field of vision 23, when the container 2 itself is stationary. Essentially, in the former case the container 2 is moved continuously by the conveyor 18, whilst in the latter case the container 2 is moved intermittently.

In the preferred embodiments, the detector 21 comprises an image acquisition device and the information which the electronic processing unit receives from the detector 21 is at least one acquired image 8 of the container 2. For example, in the embodiments in which the first layer 4 of plastic material emits electromagnetic radiation in an expected response band which comprises the visible band, the detector 21 comprises a digital camera.

In some embodiments, the detector 21 is constituted of the image acquisition device.

If the detector 21 comprises the image acquisition device and is configured to perform a plurality of successive detections for receiving electromagnetic radiation emitted by all of the successive portions of the first layer 4 of plastic material of the container 2 which gradually enter its field of vision 23, the detector 21 generates a partial acquired image 8 for each of those portions. In this case, at least one of the detector 21 or the electronic processing unit may also be programmed to combine the partial acquired images 8 and to generate an overall acquired image 8 of the entire container 2 using common techniques for combining multiple images of different parts of an object. Alternatively, the electronic processing unit may be programmed to process each partial acquired image 8 to detect the defects 7, as explained in more detail below.

In the embodiments in which the detector 21 comprises the image acquisition device and in which the information which the electronic processing unit receives is at least one acquired image 8 (whole or partial), the electronic processing unit is programmed to detect defects 7 in the first layer 4 of plastic material by means of a processing of the acquired image 8, in particular by performing the examining sub-step described above.

In more detail, in some embodiments the electronic processing unit is programmed to process the image received from the detector 21 by means of an image processing algorithm based on a comparison between the image received and an expected image 13 of the container 2. One possible embodiment of this type is based on an electronic processing unit which is programmed to perform the steps previously described with reference to the image processing algorithm which is based on the comparison between the intensity of the images (respectively of the image received and the expected image 13).

In some embodiments of the thermoforming apparatus 1, the electronic processing unit is programmed to process the image received from the detector 21 by means of an algorithm based on artificial intelligence, in particular in accordance with what was described above with regard to the method.

However, it must be emphasised that, depending on the embodiments, it is possible that the electronic processing unit is programmed to process, by means of the algorithm based on artificial intelligence, directly the image received from the detector 21 or the image received from the detector 21 previously processed by the same electronic processing unit by means of the image processing algorithm based on the comparison between the image received and the expected image 13 of the container 2. Essentially, the algorithm based on artificial intelligence and the image processing algorithm based on the comparison between the images can be used either independently of each other, or combined with each other (in any order).

In some embodiments of the thermoforming apparatus 1, the emitter 20 emits the electromagnetic radiation in a predetermined excitation band which comprises the ultraviolet band. Advantageously, the emitter 20 emits the electromagnetic radiation in a predetermined excitation band which is constituted of the ultraviolet band. These embodiments are particularly advantageous when the thermoforming apparatus 1 is intended to use a thermoformable film 3 in which the indicator is a fluorescent-based substance, in particular of the type described above. Other embodiments are also possible in accordance with what was previously described for the method.

In some embodiments, the thermoforming apparatus 1 also comprises an expelling device 24 which is associated with the conveyor 18. The expelling device 24 is connected to and controlled by the electronic processing unit. The function of the expelling device 24 is to prevent a container 2 in which at least one defect 7 was detected in the first layer 4 of plastic material (a defective container 2) from reaching the outfeed station 16. In the embodiments illustrated in the figures, the expelling device 24 is positioned at a fork in the conveyor 18: a first stretch 25 of the conveyor 18 extends from the fork as far as the outfeed station 16, whilst a second stretch 26 of the conveyor 18 extends from the fork as far as a rejecting station 27. Advantageously, the expelling device 24 comprises a diverting element (not shown in the figures) which is movable between an operating position and a non-operating position When the diverting element is in the operating position, it diverts the container 2 along the second stretch 26 of the conveyor 18 towards the rejecting station 27, whilst when the diverting element is in the non-operating position, it allows movement of the container 2 along the first stretch 25 of the conveyor 18 towards the outfeed station 16. In more detail, the diverting element is moved from the non-operating position to the operating position, as a result of a command from the electronic processing unit, when it has detected at least one defect 7 in the container 2 (defective container 2), in such a way as to divert that defective container 2 along the second stretch 26, and therefore towards the rejecting station 27. In contrast, the diverting element is kept in the non-operating position when the electronic processing unit has not detected any defect 7 (suitable container 2), in such a way that the suitable container 2 reaches the outfeed station 16.

Other embodiments of the expelling device 24 and of the relative diverting element are possible. For example the expelling device 24 may comprise a diverting element comprising a piston which pushes the defective container 2 towards the second stretch 26 of the conveyor 18. Moreover, in some embodiments the first stretch 25 and the second stretch 26 of the conveyor 18 are placed one above the other and the expelling device 24 comprises a third stretch of the conveyor 18 which is movable between a non-operating position in which it is aligned with the first stretch 25 and an operating position in which it is aligned with the second stretch 26. In other embodiments, the conveyor 18 comprises the first stretch 25 and the third stretch but not the second stretch 26; in that case, when the third stretch is in the operating position it is oriented downwards and unloads the defective container 2 directly into a collecting unit placed below the conveyor 18.

In some embodiments, the electronic processing unit is also programmed to monitor the operation of the thermoforming apparatus 1 saving and examining data about the production of defective containers 2 (that is to say, to perform the monitoring step described above). In particular, the electronic processing unit is programmed to save data about the quality of each thermoformed container 2, that is to say, about the result of the examination of each container 2; preferably it can save whether the container 2 is suitable or defective and, in the latter case, advantageously, also the reasons which led it to be classed as defective (see what was described above with regard to the method).

Moreover, the electronic processing unit is programmed to perform a processing of that data, as described above with regard to the method. Advantageously, the electronic processing unit can be programmed to also perform the optimising step, that is to say, to vary operating parameters of the thermoforming device 6 based on the results obtained from the processing of the data of the monitoring step. For example, it is possible that the electronic processing unit is operatively connected to the thermoforming device 6 to modify the operating parameters of the thermoforming device 6 (for example, as already described, the temperature, the pressure, the time). In some cases it may be possible that the variation of the operating parameters of the thermoforming device 6 is communicated to an operator and/or must be confirmed by the operator.

This invention brings important advantages.

In fact, thanks to this invention, it was possible to define a method for making a container by thermoforming and to make a thermoforming apparatus, which allow containers to be made using a thermoformable film with a thickness which is less than those currently used in the sector. That allows the use of a smaller quantity of material, cutting the costs and reducing the difficulties linked to recycling of the material.

Finally, it should be noticed that this invention is relatively easy to produce and that even the cost linked to implementing the invention is not very high.

## Claims

1. A thermoforming apparatus for making a container (2) by thermoforming a thermoformable film (3), the thermoformable film (3) and the container (2) obtained from its thermoforming comprising at least one first layer (4) of plastic material in which an indicator is distributed which emits electromagnetic radiation in an expected response band when it is excited with electromagnetic radiation in a predetermined excitation band, the thermoforming apparatus (1) comprising:
- a thermoforming device (6), which is configured to thermoform the thermoformable film (3);
- a feeding device (17) associated with the thermoforming device (6) for feeding, in use, the thermoformable film (3) to the thermoforming device (6);
- a conveyor (18) associated with the thermoforming device (6) for receiving, in use, the thermoformed container (2) and moving it towards an outfeed station (16); and
- a checking device (19) which is operatively associated with at least one of either the thermoforming device (6) or the conveyor (18) for detecting defects (7) of the first layer (4) of plastic material present in the container (2),
wherein the checking device (19) for the container (2) comprises:
an emitter (20) configured to emit electromagnetic radiation in the predetermined excitation band and to direct it towards the container (2);
a detector (21) configured to receive electromagnetic radiation emitted in the expected response band by the container (2), as a result of the excitation by the emitter (20); and
an electronic processing unit connected to the detector (21) for receiving from it, in digital format, information about the electromagnetic radiation received by the detector (21), and which is programmed to determine the presence or absence of defects (7) present in the first layer (4) of plastic material of the container (2), by means of a processing of the information received from the detector (21).

2. The apparatus according to claim 1, wherein the detector (21) has a plurality of observation lines (11) and is positioned in such a way that, in use, each observation line (11) intercepts the first layer (4) of plastic material of the container (2) only once.

3. The apparatus according to claim 1 or 2, wherein the detector (21) is configured and positioned to simultaneously receive electromagnetic radiation emitted by the entire first layer (4) of plastic material of the container (2).

4. The apparatus according to claim 1 or 2, wherein the detector (21) is associated with the conveyor (18) and is configured and positioned to receive electromagnetic radiation emitted by a portion of the first layer (4) of plastic material of the container (2), and to perform a plurality of detections while the container (2) is made to move forward by the conveyor (18) for receiving electromagnetic radiation emitted by successive portions of the first layer (4) of plastic material of the container (2), in such a way that the detector (21) receives as a whole electromagnetic radiation emitted by the entire first layer (4) of plastic material of the container (2).

5. The apparatus according to any one of claims 1 to 4, wherein the detector (21) comprises an image acquisition device and the information which the electronic processing unit receives from the detector (21) is at least one acquired image (8).

6. The apparatus according to claim 5, wherein the electronic processing unit is programmed to detect defects (7) in the first layer (4) of plastic material by means of a processing of the at least one acquired image (8).

7. The apparatus according to claim 5 or 6, wherein the electronic processing unit is programmed to process the at least one image received from the detector (21) by means of an image processing algorithm based on a comparison between the at least one image received and an expected image (13) of the container (2).

8. The apparatus according to claim 6 or 7, wherein the electronic processing unit is programmed to process the at least one image received from the detector (21) by means of an algorithm based on artificial intelligence selected from a group comprising: algorithms based on supervised learning techniques, algorithms based on unsupervised learning techniques, algorithms based on reinforcement learning techniques.

9. The apparatus according to any one of claims 1 to 8, wherein the emitter (20) emits electromagnetic radiation in a predetermined excitation band which comprises the ultraviolet band, and wherein the indicator is a fluorescent-based substance and comprises at least one element selected from a group constituted of: ultraviolet indicator, infra-red indicator, dye, pigment, optical brightener, fluorescent brightening agent, anthraquinone dye, 2,2'-(2,5-thiophenylenediyl)bis(5-tert-butylbenzoxazole), hydroxyl-4- )p-tolylamino)anthracene-9,10-dione, 2,5-thiophenediylbis(5-tert-butyl-1,3-benzoxazole).

10. The apparatus according to any one of claims 1 to 9, also comprising an expelling device (24) which is associated with the conveyor (18), which is connected to the electronic processing unit and which is controlled by the electronic processing unit for preventing a container (2) in which at least one defect (7) in the first layer (4) of plastic material was detected from reaching the outfeed station (16).

11. The apparatus according to any one of claims 1 to 10, wherein the electronic processing unit is also programmed to monitor the operation of the thermoforming apparatus (1) saving and examining data about the quality of the containers (2) made and to process such data to identify any problems of the thermoforming apparatus (1) and/or to vary operating parameters of the thermoforming device (6).

12. A method for making a container (2) by thermoforming, comprising the following steps:
a feeding step, in which a thermoformable film (3) is fed to a thermoforming device (6), the thermoformable film (3) comprising at least one first layer (4) of plastic material in which an indicator is distributed which emits electromagnetic radiation in an expected response band when it is excited with electromagnetic radiation in a predetermined excitation band;
a thermoforming step, in which the thermoformable film (3) is thermoformed by means of the thermoforming device (6) to obtain the container (2), the container (2) comprising the first layer (4) of plastic material; and
a checking step, which in turn comprises: an emitting sub-step during which electromagnetic radiation is emitted in a predetermined excitation band towards the container (2); a receiving sub-step, simultaneous with the emitting sub-step, in which there is detection of electromagnetic radiation in an expected response band emitted by the first layer (4) of plastic material of the container (2) as a result of the excitation due to the electromagnetic radiation in the predetermined excitation band; and an examining sub-step, in which information about the electromagnetic radiation detected in the expected response band is examined to determine the presence or absence of defects (7) in the first layer (4) of plastic material of the container (2).

13. The method according to claim 12, wherein the information about the electromagnetic radiation in the expected response band is at least one acquired image (8), in the checking step defects (7) in the first layer (4) of plastic material being detected by means of a processing of the at least one acquired image (8).

14. The method according to claim 13, wherein during the checking step the at least one acquired image (8) is processed by means of at least one image processing algorithm based on a comparison between the at least one acquired image (8) and an expected image (13) of the container (2).

15. The method according to claim 13 or 14, wherein during the checking step the at least one acquired image (8) is processed by means of an algorithm based on artificial intelligence selected from a group comprising: algorithms based on supervised learning techniques, algorithms based on unsupervised learning techniques, algorithms based on reinforcement learning techniques.

16. The method according to any one of claims 12 to 15, also comprising an unloading step, in which the thermoformed containers (2) are moved towards an outfeed station (16), the checking step being carried out during the unloading step.

17. The method according to any one of claims 12 to 16, also comprising a rejecting step, performed after the checking step, in which the containers (2) for which, during the checking step, at least one defect (7) in the first layer (4) of plastic material of the container (2) was detected are rejected.

18. The method according to any one of claims 12 to 17, wherein the predetermined excitation band of the electromagnetic radiation emitted during the checking step comprises the ultraviolet band, and wherein the indicator is a fluorescent-based substance and comprises at least one element selected from a group constituted of: ultraviolet indicator, infra-red indicator, dye, pigment, optical brightener, fluorescent brightening agent, anthraquinone dye, 2,2'-(2,5-thiophenylenediyl)bis(5-tert-butylbenzoxazole), hydroxyl-4- )p-tolylamino)anthracene-9,10-dione, 2,5-thiophenediylbis(5-tert-butyl-1,3- benzoxazole).

19. The method according to any one of claims 12 to 18, comprising a monitoring step in which data about the quality of the containers (2) made is saved and examined.

20. The method according to claim 19, also comprising an optimising step in which the data about the quality of a group of thermoformed containers (2) saved during the monitoring step, is processed to identify any problems of the thermoforming step and/or to vary operating parameters of the thermoforming device (6).

## Patentansprüche

1. Eine Thermoformvorrichtung zur Herstellung eines Behälters (2) durch Thermoformen einer thermoformbaren Folie (3), die thermoformbare Folie (3) und der Behälter (2), die aus ihrer Thermoformung erhalten werden, beinhalten mindestens eine erste Schicht (4) Kunststoffmaterial, in dem ein Indikator verteilt ist, der elektromagnetische Strahlung in einem erwarteten Antwortbereich aussendet, wenn er mit elektromagnetischer Strahlung in einem vorher festgelegten Anregungsbereich angeregt wird, die Thermoformvorrichtung (1) beinhaltet dabei Folgendes:
- ein Thermoformgerät (6), das dazu ausgelegt ist, die thermoformbare Folie (3) zu thermoformen;
- eine Zuführvorrichtung (17), die mit dem Thermoformgerät (6) verknüpft ist, um im Gebrauch die thermoformbare Folie (3) den Thermoformgerät (6) zuzuführen;
- einen Förderer (18), der mit dem Thermoformgerät (6) verknüpft ist, um im Gebrauch den thermogeformten Behälter (2) entgegenzunehmen und ihn zu einer Ausgabestation (16) zu bewegen; und
- eine Kontrollvorrichtung (19), die operativ mit mindestens entweder dem Thermoformgerät (6) oder dem Förderer (18) verknüpft ist, um Defekte (7) der ersten Schicht (4) Kunststoffmaterial, das im Behälter (2) vorhanden ist, zu erkennen, wobei die Kontrollvorrichtung (19) für den Behälter (2) Folgendes beinhaltet:
einen Sender (20), der dazu ausgelegt ist, elektromagnetische Strahlung in dem festgelegten Anregungsbereich zu emittieren und in Richtung des Behälters (2) zu lenken;
einen Detektor (21), der dazu ausgelegt ist, elektromagnetische Strahlung, die in dem erwarteten Antwortbereich vom Behälter (2) als Ergebnis der Anregung durch den Sender (20) emittiert wird, zu empfangen; und
eine elektronische Verarbeitungseinheit, die mit dem Detektor (21) verbunden ist, um von ihm, in digitalem Format, Informationen über die vom Detektor (21) empfangene elektromagnetische Strahlung zu empfangen, und die dazu programmiert ist, das Vorhandensein oder das Fehlen von Defekten (7), die in der ersten Schicht (4) Kunststoffmaterial des Behälters (2) vorliegen, anhand einer Verarbeitung der vom Detektor (21) empfangenen Informationen festzustellen.

2. Die Vorrichtung nach dem Patentanspruch 1, wobei der Detektor (21) eine Mehrzahl von Beobachtungslinien (11) hat und solcherart positioniert ist, dass im Gebrauch jede Beobachtungslinie (11) die erste Schicht (4) Kunststoffmaterial des Behälters (2) nur einmal abfängt.

3. Die Vorrichtung nach dem Patentanspruch 1 oder 2, wobei der Detektor (21) dazu ausgelegt und positioniert ist, gleichzeitig elektromagnetische Strahlung, die von der gesamten ersten Schicht (4) Kunststoffmaterial des Behälters (2) emittiert wird, zu empfangen.

4. Die Vorrichtung nach dem Patentanspruch 1 oder 2, wobei der Detektor (21) mit dem Förderer (18) verknüpft ist und dazu ausgelegt und positioniert ist, elektromagnetische Strahlung, die von einem Anteil der ersten Schicht (4) Kunststoffmaterial des Behälters (2) emittiert wird, zu empfangen und eine Mehrzahl von Erkennungen durchzuführen, während der Behälter (2) durch den Förderer (18) vorwärts bewegt wird, um elektromagnetische Strahlung, die von aufeinander folgenden Anteilen der ersten Schicht (4) Kunststoffmaterial des Behälters (2) emittiert wird, zu empfangen, solcherart, dass der Detektor (21) elektromagnetische Strahlung, die von der gesamten ersten Schicht (4) Kunststoffmaterial des Behälters (2) emittiert wird, im Ganzen empfängt.

5. Die Vorrichtung nach jedem der Patentansprüche 1 bis 4, wobei der Detektor (21) ein Bildaufnahmegerät beinhaltet und die Informationen, die die elektronische Verarbeitungseinheit vom Detektor (21) empfängt, mindestens ein aufgenommenes Bild (8) sind.

6. Die Vorrichtung nach dem Patentanspruch 5, wobei die elektronische Verarbeitungseinheit dazu programmiert ist, Defekte (7) in der ersten Schicht (4) Kunststoffmaterial anhand einer Verarbeitung des mindestens einen aufgenommenen Bilds (8) zu erkennen.

7. Die Vorrichtung nach dem Patentanspruch 5 oder 6, wobei die elektronische Verarbeitungseinheit dazu programmiert ist, das mindestens eine vom Detektor (21) empfangene Bild mithilfe eines Bildverarbeitungsalgorithmus', der auf einem Vergleich zwischen dem mindestens einen empfangenen Bild und einem erwarteten Bild (13) des Behälters (2) beruht, zu verarbeiten.

8. Die Vorrichtung nach dem Patentanspruch 6 oder 7, wobei die elektronische Verarbeitungseinheit dazu programmiert ist, das mindestens eine vom Detektor (21) empfangene Bild anhand eines Algorithmus' zu verarbeiten, der auf Künstlicher Intelligenz beruht, die aus einer Gruppe ausgewählt ist, die Folgendes umfasst: Algorithmen, die auf Methoden des überwachten Lernens beruhen, Algorithmen, die auf Methoden des unüberwachten Lernens beruhen, Algorithmen, die auf Methoden des verstärkenden Lernens beruhen

9. Die Vorrichtung nach jedem der Patentansprüche 1 bis 8, wobei der Sender (20) elektromagnetische Strahlung in einem vorher festgelegten Anregungsbereich emittiert, der den Ultraviolettbereich umfasst, und wobei der Indikator eine leuchtstoffbasierte Substanz ist und mindestens ein Element umfasst, das aus einer Gruppe ausgewählt ist, die aus Folgendem besteht: Ultraviolettindikatoren, Infratorindikatoren, Farbstoffen, Pigmenten, optischen Aufhellern, fluoreszierenden Aufhellern, Anthrachinonfarbstoffen, 2,2'-(2,5-Thiophenylenediyl)bis(5-tert-butylbenzoxazol), Hydroxyl-4- )p- Tolylamin)anthracen-9,10-dion, 2,5-Thiophenediylbis(5-tert-butyl-1,3- benzoxazol).

10. Die Vorrichtung nach jedem der Patentansprüche 1 bis 9, auch eine Ausstoßvorrichtung (24) beinhaltend, die mit dem Förderer (18) verknüpft ist, die mit der elektronischen Verarbeitungseinheit verbunden ist, und die durch die elektronische Verarbeitungseinheit gesteuert wird, um zu verhindern, dass ein Behälter (2), in dem mindestens ein Defekt (7) in der ersten Schicht (4) Kunststoffmaterial erkannt wurde, die Ausgabestation (16) erreicht.

11. Die Vorrichtung nach jedem der Patentansprüche 1 bis 10, wobei die elektronische Verarbeitungseinheit auch dazu programmiert ist, den Betrieb der Thermoformvorrichtung (1) zu überwachen, indem sie Daten über die Qualität der hergestellten Behälter (2) speichert und überprüft, und solche Daten zu verarbeiten, um jegliche Probleme der Thermoformvorrichtung (1) zu identifizieren und/oder Betriebsparameter des Thermoformgeräts (6) zu verändern

12. Ein Verfahren zur Herstellung eines Behälters (2) durch Thermoformung, folgende Schritte beinhaltend:
einen Zuführungsschritt, bei dem eine thermoformbare Folie (3) einem Thermoformgerät (6) zugeführt wird, die thermoformbare Folie (3) beinhaltet dabei mindestens eine erste Schicht (5) Kunststoffmaterial, in dem ein Indikator verteilt ist, der elektromagnetische Strahlung in einem erwarteten Antwortbereich emittiert, wenn er durch elektromagnetische Strahlung in einem vorher festgelegten Anregungsbereich angeregt wird;
einen Thermoformschritt, bei dem die thermoformbare Folie (3) mithilfe des Thermoformgeräts (6) thermogeformt wird, um den Behälter (2) zu erhalten, der Behälter (2) beinhaltet dabei die erste Schicht (4) Kunststoffmaterial; und
einen Kontrollschritt, der seinerseits Folgendes beinhaltet: einen Emissions-Unterschritt, während dessen elektromagnetische Strahlung in einem vorher festgelegten Anregungsbereich in Richtung des Behälters (2) emittiert wird; einen Empfangs-Unterschritt, gleichzeitig mit dem Emissions-Unterschritt, bei dem eine Erkennung elektromagnetischer Strahlung in einem erwarteten Antwortbereich, die von der ersten Schicht (4) Kunststoffmaterial des Behälters (2) als Ergebnis der Anregung aufgrund der elektromagnetischen Strahlung in dem vorher festgelegten Anregungsbereich emittiert wird, erfolgt; und ein Prüf-Unterschritt, bei dem Informationen über die erkannte elektromagnetische Strahlung in dem erwarteten Antwortbereich überprüft werden, um das Vorhandensein oder das Fehlen von Defekten (7) in der ersten Schicht (4) Kunststoffmaterial des Behälters (2) festzustellen.

13. Das Verfahren nach dem Patentanspruch 12, wobei die Informationen über die elektromagnetische Strahlung in dem erwarteten Antwortbereich mindestens ein aufgenommenes Bild (8) sind, beim Kontrollschritt werden Defekte (7) in der ersten Schicht (4) Kunststoffmaterial dabei anhand einer Verarbeitung des mindestens einen aufgenommenen Bilds (8) erkannt.

14. Das Verfahren nach dem Patentanspruch 13, wobei während des Kontrollschritts das mindestens eine aufgenommene Bild (8) anhand mindestens eines Bildverarbeitungsalgorithmus' verarbeitet wird, der auf einem Vergleich zwischen dem mindestens einen aufgenommenen Bild (8) und einem erwarteten Bild (13) des Behälters (2) beruht.

15. Das Verfahren nach dem Patentanspruch 13 oder 14, wobei während des Kontrollschritts das mindestens eine aufgenommene Bild (8) anhand eines Algorithmus' verarbeitet wird, der auf Künstlicher Intelligenz beruht, die aus einer Gruppe ausgewählt ist, die Folgendes umfasst: Algorithmen, die auf Methoden des überwachten Lernens beruhen, Algorithmen, die auf Methoden des unüberwachten Lernens beruhen, Algorithmen, die auf Methoden des verstärkenden Lernens beruhen.

16. Das Verfahren nach jedem der Patentansprüche 12 bis 15, auch einen Entladeschritt beinhaltend, bei dem die thermogeformten Behälter (2) in Richtung einer Ausgabestation (16) bewegt werden, der Kontrollschritt wird dabei während des Entladeschritts durchgeführt.

17. Das Verfahren nach jedem der Patentansprüche 12 bis 16, auch einen Ausstoßschritt beinhaltend, der nach dem Kontrollschritt durchgeführt wird, bei dem die Behälter (2), bei denen während des Kontrollschritts mindestens ein Defekt (7) in der ersten Schicht (4) Kunststoffmaterial des Behälters (2) erkannt wurde, ausgestoßen werden.

18. Das Verfahren nach jedem der Patentansprüche 12 bis 17, wobei der vorher festgelegte Anregungsbereich der elektromagnetischen Strahlung, die während des Kontrollschritts emittiert wird, den Ultraviolettbereich umfasst, und wobei der Indikator eine leuchtstoffbasierte Substanz ist und mindestens ein Element beinhaltet, das aus eine Gruppe ausgewählt ist, die aus Folgendem besteht: Ultraviolettindikatoren, Infratorindikatoren, Farbstoffen, Pigmenten, optischen Aufhellern, fluoreszierenden Aufhellern, Anthrachinonfarbstoffen, 2,2'-(2,5-Thiophenylenediyl)bis(5-tert-butylbenzoxazol), Hydroxyl-4- )p- Tolylamin)anthracen-9,10-dion, 2,5-Thiophenediylbis(5-tert-butyl-1,3- benzoxazol).

19. Das Verfahren nach jedem der Patentansprüche 12 bis 18, einen Überwachungsschritt beinhaltend, bei dem Daten über die Qualität der hergestellten Behälter (2) gespeichert und überprüft werden.

20. Das Verfahren nach dem Patentanspruch 19, auch einen Optimierungsschritt beinhaltend, bei dem die Daten über die Qualität einer Gruppe hergestellter Behälter (2), die während des Überwachungsschritts gespeichert wurden, verarbeitet werden, um jegliche Probleme des Thermoformschritts zu identifizieren und/oder um Betriebsparameter des Thermoformgeräts (6) zu verändern.

## Revendications

1. Un appareil de thermoformage pour fabriquer un récipient (2) par thermoformage d'un film thermoformable (3), le film thermoformable (3) et le récipient (2) obtenu par son thermoformage comprenant au moins une première couche (4) de matière plastique dans laquelle est distribué un indicateur qui émet un rayonnement électromagnétique dans une bande de réponse attendue lorsqu'il est excité par un rayonnement électromagnétique dans une bande d'excitation prédéfinie, l'appareil de thermoformage (1) comprenant :
- un dispositif de thermoformage (6), qui est configuré pour thermoformer le film thermoformable (3) ;
- un dispositif d'alimentation (17) associé au dispositif de thermoformage (6) pour alimenter, lors de l'utilisation, le film thermoformable (3) au dispositif de thermoformage (6) ;
- un transporteur (18) associé au dispositif de thermoformage (6) pour recevoir, lors de l'utilisation, le récipient (2) thermoformé et l'acheminer vers une station de sortie (16) ; et
- un dispositif de contrôle (19) qui est opérationnellement associé avec au moins l'un entre le dispositif de thermoformage (6) et le transporteur (18) pour détecter des défauts (7) de la première couche (4) de matière plastique présente dans le récipient (2),
dans lequel le dispositif (19) de contrôle du récipient (2) comprend :
un émetteur (20) configuré pour émettre un rayonnement électromagnétique dans la bande d'excitation prédéfinie et pour le diriger vers le récipient (2) ;
un détecteur (21) configuré pour recevoir un rayonnement électromagnétique émis dans la bande de réponse attendue par le récipient (2), suite à l'excitation par l'émetteur (20) ; et
une unité électronique de traitement reliée au détecteur (21) pour recevoir de celui-ci, au format numérique, des informations sur le rayonnement électromagnétique reçu par le détecteur (21), et qui est programmée pour déterminer la présence ou l'absence de défauts (7) présents dans la première couche (4) de matière plastique du récipient (2), par le biais d'un traitement des informations reçues depuis le détecteur (21).

2. L'appareil selon la revendication 1, dans lequel le détecteur (21) a une pluralité de directions d'observation (11) et est positionné de manière à ce que, lors de l'utilisation, chaque direction d'observation (11) intercepte une seule fois la première couche (4) de matière plastique du récipient (2).

3. L'appareil selon la revendication 1 ou 2, dans lequel le détecteur (21) est configuré et positionné pour recevoir simultanément un rayonnement électromagnétique émis par toute la première couche (4) de matière plastique du récipient (2).

4. L'appareil selon la revendication 1 ou 2, dans lequel le détecteur (21) est associé au transporteur (18) et est configuré et positionné pour recevoir un rayonnement électromagnétique émis par une portion de la première couche (4) de matière plastique du récipient (2), et pour effectuer une pluralité de détections alors que le récipient (2) est entraîné à avancer par le transporteur (18) pour recevoir un rayonnement électromagnétique émis par des portions successives de la première couche (4) de matière plastique du récipient (2), de manière à ce que le détecteur (21) reçoive globalement un rayonnement électromagnétique émis par toute la première couche (4) de matière plastique du récipient (2).

5. L'appareil selon l'une quelconque des revendications de 1 à 4, dans lequel le détecteur (21) comprend un dispositif d'acquisition d'images et les informations que l'unité électronique de traitement reçoit du détecteur (21) sont au moins une image acquise (8).

6. L'appareil selon la revendication 5, dans lequel l'unité électronique de traitement est programmée pour détecter des défauts (7) dans la première couche (4) de matière plastique par le biais d'un traitement de ladite au moins une image acquise (8).

7. L'appareil selon la revendication 5 ou 6, dans lequel l'unité électronique de traitement est programmée pour traiter ladite au moins une image reçue du détecteur (21) par le biais d'un algorithme de traitement des images basé sur une comparaison entre ladite au moins une image reçue et une image attendue (13) du récipient (2).

8. L'appareil selon la revendication 6 ou 7, dans lequel l'unité électronique de traitement est programmée pour traiter ladite au moins une image reçue du détecteur (21) par le biais d'un algorithme basé sur l'intelligence artificielle sélectionné dans un groupe comprenant : algorithmes basés sur des techniques d'apprentissage supervisé, algorithmes basés sur des techniques d'apprentissage non supervisé, algorithmes basés sur des techniques d'apprentissage par renforcement.

9. L'appareil selon l'une quelconque des revendications de 1 à 8, dans lequel l'émetteur (20) émet un rayonnement électromagnétique dans une bande d'excitation prédéfinie qui comprend la bande de l'ultraviolet, et dans lequel l'indicateur est une substance à base fluorescente et comprend au moins un élément sélectionné dans un groupe constitué de : indicateur ultraviolet, indicateur infrarouge, colorant, pigment, azurant optique, agent d'azurage fluorescent, colorant anthraquinone, 2,2'-(2,5-thiophenylenediyl)bis(5-tert-butylbenzoxazole), hydroxyl-4- )p-tolylamino)anthracene-9,10-dione, 2,5-thiophenediylbis(5-tert-butyl-I,3-benzoxazole).

10. L'appareil selon l'une quelconque des revendications de 1 à 9, comprenant également un dispositif d'éjection (24) qui est associé au transporteur (18), qui est relié à l'unité électronique de traitement et qui est commandé par l'unité électronique de traitement pour empêcher qu'un récipient (2), dans lequel au moins un défaut (7) a été détecté dans la première couche (4) de matière plastique, n'atteigne la station de sortie (16).

11. L'appareil selon l'une quelconque des revendications de 1 à 10, dans lequel l'unité électronique de traitement est également programmée pour surveiller le fonctionnement de l'appareil de thermoformage (1) en enregistrant et en examinant des données sur la qualité des récipients (2) réalisés et pour traiter ces données afin d'identifier tout problème de l'appareil de thermoformage (1) et/ou afin de modifier des paramètres de fonctionnement du dispositif de thermoformage (6).

12. Un procédé de fabrication d'un récipient (2) par thermoformage, comprenant les étapes suivantes :
une étape d'alimentation, au cours de laquelle un film thermoformable (3) est alimenté à un dispositif de thermoformage (6), le film thermoformable (3) comprenant au moins une première couche (4) de matière plastique dans laquelle est distribué un indicateur qui émet un rayonnement électromagnétique dans une bande de réponse attendue lorsqu'il est excité par un rayonnement électromagnétique dans une bande d'excitation prédéfinie ;
une étape de thermoformage, au cours de laquelle le film thermoformable (3) est thermoformé au moyen du dispositif de thermoformage (6) pour obtenir le récipient (2), le récipient (2) comprenant la première couche (4) de matière plastique ; et
une étape de contrôle, qui comprend à son tour : une sous-étape d'émission au cours de laquelle un rayonnement électromagnétique est émis dans une bande d'excitation prédéfinie vers le récipient (2) ; une sous-étape de réception, simultanée à la sous-étape d'émission, au cours de laquelle a lieu une détection d'un rayonnement électromagnétique dans une bande de réponse attendue émis par la première couche (4) de matière plastique du récipient (2) suite à l'excitation due au rayonnement électromagnétique dans la bande d'excitation prédéfinie ; et une sous-étape d'examen, au cours de laquelle des informations sur le rayonnement électromagnétique détecté dans la bande de réponse attendue sont examinées afin de déterminer la présence ou l'absence de défauts (7) dans la première couche (4) de matière plastique du récipient (2).

13. Le procédé selon la revendication 12, dans lequel les informations sur le rayonnement électromagnétique dans la bande de réponse attendue sont au moins une image acquise (8), des défauts (7) dans la première couche (4) de matière plastique ayant été détectés lors de l'étape de contrôle par le biais d'un traitement de ladite au moins une image acquise (8).

14. Le procédé selon la revendication 13, dans lequel, au cours de l'étape de contrôle, ladite au moins une image acquise (8) est traitée par le biais d'au moins un algorithme de traitement des images basé sur une comparaison entre ladite au moins une image acquise (8) et une image attendue (13) du récipient (2).

15. Le procédé selon la revendication 13 ou 14, dans lequel, au cours de l'étape de contrôle, ladite au moins une image acquise (8) est traitée par le biais d'un algorithme basé sur l'intelligence artificielle sélectionné dans un groupe comprenant : algorithmes basés sur des techniques d'apprentissage supervisé, algorithmes basés sur des techniques d'apprentissage non supervisé, algorithmes basé sur des techniques d'apprentissage par renforcement.

16. Le procédé selon l'une quelconque des revendications de 12 à 15, comprenant également une étape de déchargement, au cours de laquelle les récipients thermoformés (2) sont acheminés vers une station de sortie (16), l'étape de contrôle étant effectuée pendant l'étape de déchargement.

17. Le procédé selon l'une quelconque des revendications de 12 à 16, comprenant également une étape de mise au rebut, effectuée après l'étape de contrôle, au cours de laquelle les récipients (2) pour lesquels, au cours de l'étape de contrôle, au moins un défaut (7) a été détecté dans la première couche (4) de matière plastique du récipient (2) sont mis au rebut.

18. Le procédé selon l'une quelconque des revendications de 12 à 17, dans lequel la bande d'excitation prédéfinie du rayonnement électromagnétique émis au cours de l'étape de contrôle comprend la bande de l'ultraviolet, et dans lequel l'indicateur est une substance à base fluorescente et comprend au moins un élément sélectionné dans un groupe constitué de : indicateur ultraviolet, indicateur infrarouge, colorant, pigment, azurant optique, agent d'azurage fluorescent, colorant anthraquinone, 2,2'-(2,5-thiophenylenediyl)bis(5-tert-butylbenzoxazole), hydroxyl-4- )p-tolylamino)anthracene-9,10-dione, 2,5-thiophenediylbis(5-tert- butyl-l,3-benzoxazole).

19. Le procédé selon l'une quelconque des revendications de 12 à 18, comprenant une étape de surveillance au cours de laquelle des données sur la qualité des récipients (2) réalisés sont enregistrées et examinées.

20. Le procédé selon la revendication 19, comprenant également une étape d'optimisation au cours de laquelle les données sur la qualité d'un groupe de récipients thermoformés (2), enregistrées lors de l'étape de surveillance, sont traitées pour identifier tout problème de l'étape de thermoformage et/ou pour modifier des paramètres de fonctionnement du dispositif de thermoformage (6).
